# EUROPÄISCHE PATENTANMELDUNG

(11) **EP 4 761 127 A1**
(43) Veröffentlichungstag der Anmeldung: **17.06.2026**
(21) Anmeldenummer: 24219710.1
(22) Anmeldetag: 13.12.2024
(51) Int. Cl.: H04B 7/06, H04L 1/1867, H04L 9/00

(54) **POST SHANNON'SCHE KOMMUNIKATION ZUR KANALOPTIMIERUNG VON IOT SENSOREN IN MOBILFUNKNETZWERKEN**

(71) Anmelder: Deutsche Telekom AG, 53113 Bonn (DE)
(72) Erfinder: Dr. GEITZ, Marc, 58089 Hagen (DE)
(74) Vertreter: karo IP

(57) **Zusammenfassung**

Verfahren und System zum Ressourcenmanagement bei der Datenkommunikation in einer Funkzelle eines Mobilfunknetzes 6, insbesondere nach dem 5G oder einem nachfolgenden Standard, in der eine Vielzahl von kommunikationsfähigen Sensoren 7, 8 lokalisiert sind, dabei das Nutzen freier Uplink-Ressourcen in der Funkzelle durch Aussenden von Post Shannon'schen Identifikationsnachrichten über einen Broadcast-Kanal 9, wobei die Identifikationsnachrichten vorbestimmte Sensoren 7, 8 adressieren und zur Rückübertragung von Sensordaten unter Nutzung der freien Uplink-Ressourcen auffordern und das Rückübertragen von Sensordaten durch die adressierten Sensoren 7, 8, bei denen die Dekodierung der Identifikationsnachrichten zu einem positivem Ergebnis führte.

## Beschreibung

Die vorliegende Erfindung betrifft ein Verfahren zur Datenkommunikation in Zellen von Mobilfunknetzen, insbesondere in Mobilfunknetzen der fünften (5G) und sechsten (6G) Generation, wobei in den Zellen jeweils eine Vielzahl von kommunikationsfähigen Endgeräten, insbesondere Sensoren, wie sie beispielsweise in vernetzten IoT-Umgebungen (Internet of Things) eingesetzt werden, lokalisiert sind. Diese Endgeräte, respektive Sensoren werden nachfolgend auch als "IoT-Geräte" und "IoT-Sensoren" bezeichnet. Die Erfindung betrifft auch ein entsprechendes System zur Umsetzung des erfindungsgemäßen Verfahrens.

Vor dem Hintergrund der fortschreitenden Digitalisierung und Vernetzung ist zu erwarten, dass die Anzahl der mobilfunkverbundenen IoT-Geräte in den kommenden Jahren exponentiell zunehmen wird. Solche Geräte kommen schon jetzt in einer Vielzahl von Anwendungen zum Einsatz. Darunter sind stationäre Sensoren für Smart-Home-Anwendungen, wie beispielsweise Thermostate, Rauchmelder und Fenster-/Türkontakte; es finden sich Sensoren für Smart-Factory-Anwendungen bei der Produktionsüberwachung, der Qualitätskontrolle oder der Maschinenüberwachung; und es sind stationäre Sensoren für Smart-Office-Anwendungen im Einsatz. Darüber hinaus werden mobile Sensoren in Bereichen wie Smart-Logistics (GPS-Tracker, Feuchtigkeits- und Temperaturüberwachung in Transportcontainern), Smart-City-Anwendungen, wie der Verkehrsüberwachung und der Umweltüberwachung, Smart-Clothing- und Smart-Healthcare-Anwendungen in sogenannten "Wearables" zur Gesundheitsüberwachung und in medizinischen Implantaten, eingesetzt. Es ist davon auszugehen, dass in naher Zukunft bis zu einer Million solcher stationärer und mobiler IoT-Geräte innerhalb einer einzelnen Mobilfunkzelle gleichzeitig betrieben werden müssen.

Diese Entwicklung stellt Mobilfunknetze vor erhebliche Herausforderungen, weil diese eine dramatische Zunahme der Datenlast und des Verwaltungsaufwands zu bewältigen haben. Zwar generieren IoT-Geräte in der Regel nur geringe Datenmengen pro Zeiteinheit, jedoch führt die immense Anzahl der Geräte zu einem signifikanten Datenaufkommen. Dabei macht es das bislang bekannte Management von Mobilfunkzellen erforderlich, dass für jede einzelne Datenübertragung von einem IoT Gerät ins Netz eine individuelle Verbindung aufgebaut und verwaltet wird. Diese Organisation umfasst Aufgaben wie die Abfrage der Signalqualität, das Paging und die Zuweisung von Ressourcenblöcken. Solche sequenziellen Managementprozesse stoßen bei der zu erwartenden hohen Anzahl an Geräten jedoch schnell an ihre Grenzen und limitieren die Skalierbarkeit des Netzes.

Bisherige Strategien zur Bewältigung dieser Herausforderungen waren im Wesentlichen auf Versuche beschränkt, durch Verkleinerung der Mobilfunkzellen die Anzahl der Geräte pro Zelle zu reduzieren. Diese Strategien sind jedoch mit erheblichen Nachteilen verbunden. So bedeuten kleinere Zellen nicht nur erhöhte Kosten für den Netzausbau, sondern auch eine gesteigerte Strahlenbelastung durch die größere Anzahl von Antennen. Zudem ist ein von einem höheren Energieverbrauch aufgrund der benötigten Infrastruktur auszugehen.

Auf der anderen Seite gibt es Entwicklungen, Ideen aus der "Post Shannon'schen Kommunikationstheorie" im Mobilfunk zu etablieren. Im Gegensatz zur klassischen Kommunikation, bei der jede Nachricht über dedizierte Ressourcen übertragen wird, erlaubt die Post Shannon'sche Theorie als besonders effiziente Alternative die Übermittlung von Identifikationsnachrichten, die mit minimalem Ressourcenverbrauch über einen Broadcast-Kanal versendet werden können. Jedes empfangsbereite Endgerät kann die mit einer solchen Identifikationsnachricht übermittelte Frage "Habe ich die Nachricht XY empfangen?" ganz einfach mit "Ja" oder "Nein" beantworten.

Somit ist die für diese Art der Kommunikation benötigte Kanalkapazität verschwindend gering, was die effiziente Nutzung der zur Verfügung stehenden Ressourcen ermöglicht. Dabei sagt die entsprechende Theorie ein doppelt logarithmisches Verhalten vorher. Anders ausgedrückt, können 2^(Anzahl der klassischen Nachrichten) von Post Shannon Identifikationsnachrichten verschickt werden, sofern diese im Rahmen einer vorangehenden Konfiguration zwischen dem Sender und Empfänger vereinbart wurden.

Hingegen ist das verfügbare Frequenzspektrum in aktuellen Mobilfunknetzwerken in Ressourcenblöcke unterteilt, die von mehreren Teilnehmern genutzt werden können. Die Ressourcen-Blöcke umfassen bei 5G Netzwerken jeweils 12 Sub-Carrier mit einem Spacing (SCS) von (DT: 30kHz). Dadurch lassen sich 1 / SCS Pulse pro Sekunde versenden. Die Pulse werden typsicherweise mit 256 Bit QAM moduliert, so dass jeder Puls 8 Bit einer Nachricht kodiert. Fehlerkorrekturen kosten weitere Ressourcen. Andererseits erzeugt die Möglichkeit von MIMO (Multiple-Input Multiple-Output) eine räumliche Diversifizierung. Insgesamt berechnet sich die Sendeleistung eines 5G Netzwerkes auf ca. 5 Gbit/Sekunde. Zur Realisierung der Post Shannon'schen Kommunikation können bestimmte Ressourcenblöcke gezielt für diese Art des Nachrichtenaustauschs reserviert werden. Solche Nachrichten lassen sich insbesondere über den Broadcast-Kanal einer Mobilfunkzelle verbreiten.

Vor diesem Hintergrund stellen sich nun die Aufgaben, ein Verfahren und ein System zu entwickeln, das die Kapazitäten einer Mobilfunkzelle insbesondere des 5G oder des zukünftigen 6G Standards zum Ansprechen und zur Abfrage von Endgeräten respektive Sensoren effizient nutzt und die Kommunikation mit den Geräten mit minimalem Ressourcenverbrauch und Verwaltungsaufwand ermöglicht.

Diese Aufgaben werden durch das Verfahren nach Anspruch 1 und das System nach Anspruch 14 gelöst. Besonders vorteilhafte Ausführungsformen sind in den Unteransprüchen genannt.

Die Idee der erfindungsgemäßen Vorgehensweise liegt zusammengefasst darin, dass das Mobilfunknetz zur Nutzung freier Uplink-Ressourcen innerhalb einer Zelle diese mittels sehr kurzer Post Shannon'scher Identifikationsnachrichten in der Zelle vorhandenen kommunikationsfähigen IoT-Geräten über einen von all diesen Geräten abgehörten Broadcast-Kanal für eine Rückübertragung von Daten "anbietet". Ein IoT-Gerät, das sich von einer Post Shannon'schen Identifikationsnachricht angesprochen fühlt und bei dem auch Daten zum Versenden anstehen, beginnt daraufhin, die Rückübertragung auf den freien Uplink-Ressourcen durchzuführen.

Bekanntermaßen erfordert diese Art der Post Shannon'sche Kommunikation (PSC) eine im Vorfeld durchgeführte Verteilung von Zufallswerten an alle Endgeräte innerhalb einer Mobilfunkzelle. Die zwischen dem Mobilfunknetz und den Sensoren vorverteilten Zufallszahlen werden gespeichert und für die Kodierung und Decodierung der Identifikationsnachrichten verwendet. Die Verteilung der Zufallswerte kann mit der Initialisierung der jeweiligen Endgeräte in der Zelle und/oder zu bestimmten Tageszeiten und/oder im Rahmen eines Handover-Prozesses beim Betreten der Zelle erfolgen.

Bei einer Zelle mit einer Million IoT-Sensoren (10⁶ Sensoren) und einer geographischen Auflösung von 1 m² innerhalb einer Zellfläche von 10⁶ m², kombiniert mit einer zeitlichen Auflösung von 0,01 Sekunden (mithin hundert Zeitschlitzen pro Sekunde und entsprechend 3,15 × 10⁹ Zeitschlitze pro Tag), resultieren insgesamt etwa 3 × 10¹⁵ mögliche Kombinationen, um einen spezifischen Ort zu einer bestimmten Zeit zu identifizieren. Zur Identifikation dieser Kombinationen reicht eine effiziente Kodierung mit weniger als 6 Bits aus, um jeden Punkt einer Fläche von 1 m² innerhalb eines hundertstel-Sekunden-Zeitschlitzes eindeutig zu adressieren. Um die Zufallswerte an alle Sensoren innerhalb der Zelle zu verteilen, ist eine tägliche Übertragungsmenge von etwa 518 KBit ausreichend, basierend auf einer Identifikation pro Sekunde (86.400 Sekunden pro Tag × 6 Bits pro Identifikation), um eine Identifikation durchführen zu können. Bei mehreren Versuchen multipliziert sich dieser Wert entsprechend.

Diese vorverteilten Zufallswerte ermöglichen es jedem IoT-Sensor, einmal pro Sekunde eine Identifikationsnachricht des Radio Access Network (RAN) zu überprüfen. Wenn ein Sensor feststellt, dass er sich zur kodierten Zeit an der kodierten Position befindet, kann er seine Daten gezielt in der nächsten ihm zugeteilten Funkressource absenden, die seinen Standort abdeckt.

Im beschriebenen Rahmen dekodiert jeder IoT-Sensor typischerweise einmal pro Sekunde eine Identifikationsnachricht. Dieser Vorgang erfordert eine gewisse Rechenleistung, die mit einem entsprechenden Energieverbrauch verbunden ist. Die Anzahl dieser Aktivitäten ist jedoch vergleichbar mit derjenigen in bestehenden 4G- und 5G-Funkkanälen und liegt somit in einem technisch und energetisch vertretbaren Bereich.

In einer vorteilhaften Ausführungsform ist im System eine Verzögerung voreingestellt, die vorgibt, wann die IoT Geräte nach Erhalt einer Post Shannon'schen Identifikationsnachricht die Rückübertragung ihrer Daten starten sollen. Diese Verzögerung kann als definierte Anzahl von abzuwartenden Zeitschlitzen oder als eine exakte Zeitangabe in (Teilen von) Sekunden nach Erhalt der Identifikationsnachricht vorgegeben sein. Eine solche zeitliche Steuerung gewährleistet, dass mehrere IoT-Geräte innerhalb derselben Mobilfunkzelle effizient koordiniert werden können, ohne dass es zu Überschneidungen oder Interferenzen bei der Datenübertragung kommt.

Um den Energieverbrauch weiter zu optimieren, dekodieren Sensoren die Post Shannon'schen Identifikationsnachrichten nur dann, wenn sie tatsächlich Messdaten versenden, respektive rückübertragen möchten. Ein Sensor kann beispielsweise seine Messdaten über einen längeren Zeitraum sammeln und erst dann für eine begrenzte Zeit aktiv werden, um die Identifikationsnachrichten zu dekodieren. Sobald ihm dann ein geeigneter Sende-Zeitschlitz im Netzwerk über eine Identifikationsnachricht angeboten wird, kann er die Rückübertragung der Daten durchführen. Dieses Vorgehen reduziert die Anzahl der Dekodierungszyklen und ermöglicht eine erhebliche Energieeinsparung, was insbesondere für batteriebetriebene IoT-Geräte von Vorteil ist.

Das erfindungsgemäße Verfahren führt seitens des Netzwerkes auch zu einer deutlichen Reduzierung des Kontrollaufwands, da die IoT-Sensoren nur bei Bedarf adressiert und aktiviert werden. Dies minimiert die zu verwaltenden Datenmengen und ermöglicht ein "on-demand" Management der IoT-Daten, das die verfügbaren Ressourcen gezielt nutzt. Durch die gezielte Aktivierung von Sensoren kann der IoT-Datenverkehr effizient verwaltet werden. Gleichzeitig bleiben IoT-Sensoren, die keine Daten übertragen, inaktiv, wodurch das Gesamtrauschen im Netz reduziert wird. Dies verringert den Bedarf an Forward Error Correction (FEC), was die Ressourcenauslastung zusätzlich verbessert. Insgesamt ermöglicht das Verfahren eine kosteneffizientere Infrastruktur, da weniger Investitionen in den Netzausbau erforderlich sind und der Energieverbrauch des Netzwerks gesenkt wird.

Auch für die IoT-Sensoren selber bietet das Verfahren erhebliche Vorteile hinsichtlich der Energieeffizienz, da die Geräte nur bei Bedarf und nach expliziter Aufforderung seitens des Netzes aktiv werden und ansonsten im energiesparenden Standby-Modus verbleiben können. Das verlängert die Batterielaufzeit erheblich und reduziert den Wartungsaufwand. Die Geräte bleiben mit dem Mobilfunknetz gekoppelt, nutzen für den Empfang jedoch ausschließlich ressourcenschonende Broadcast-Kanäle, was die Komplexität der Kommunikation verringert.

Somit ermöglicht die Erfindung selbst bei einer sehr hohen Anzahl von IoT-Sensoren die optimale Ausnutzung des in einer Mobilfunkzelle verfügbaren Frequenzspektrums.

Dabei wird die Bandbreite vorteilhafterweise so verwaltet, dass zunächst Services mit garantierten Quality-of-Service-Anforderungen (QoS), wie teleoperierte Fahrzeuge oder andere niedriglatente Anwendungen, bevorzugt bedient werden. Anschließend wird die verbleibende Kapazität für zeitkritische Dienste wie Telefongespräche oder Video-Telefonie genutzt. Nicht genutzte Ressourcen werden dynamisch für IoT-Sensoren freigegeben und diesen zur Übertragung von Messdaten signalisiert.

Durch die gezielte Initiierung der Übertragung von Messdaten durch IoT-Sensoren kann eine gleichzeitige Übertragung vieler Sensoren vermieden werden. Somit bleibt das Gesamtrauschen in der Mobilfunkzelle niedrig und die Netzstabilität wird sichergestellt. Die reduzierte Störung durch die kontrolliert initiierte Datenübertragung minimiert den Bedarf an Forward Error Correction (FEC), was die verfügbare Bandbreite noch effektiver nutzbar macht.

Vorteilhafterweise erfolgt die Rückübertragung der Sensordaten in den durch einen gerichteten MIMO-Strahl bereitgestellten freien Uplink-Ressourcen. Insbesondere wird mit der Einführung von "Massive MIMO" (Multiple Input, Multiple Output) in modernen Mobilfunknetzen eine noch präzisere und effizientere Nutzung der verfügbaren Funkressourcen auch im Rahmen der Erfindung möglich. MIMO ist die Schlüsseltechnologie, mit der sich mehrere Sende- und Empfangsantennen gleichzeitig nutzen lassen, um die Datenübertragungsraten zu erhöhen und die Signalstabilität zu verbessern. Dabei wird die räumliche Diversität genutzt, um mehrere Datenströme gleichzeitig über dieselbe Frequenz zu senden, was die Netzkapazität deutlich erhöht.

Massive MIMO geht einen Schritt weiter, indem eine große Anzahl von Antennen - oft mehrere Dutzende oder sogar Hunderte - in einer Basisstation integriert wird. Dies ermöglicht die gezielte Bündelung elektromagnetischer Strahlung in Form von Strahlungskeulen, die ihre Energie auf bestimmte Bereiche oder Nutzer konzentrieren. Diese Strahlungskeulen können dynamisch ausgerichtet werden, um datenintensive oder qualitätskritische Anwendungen effizient zu bedienen. In einer vorteilhaften Ausführungsform überstreicht die Strahlungskeule des MIMO-Strahls die Funkzelle gemäß einer vorbestimmbaren Trajektorie und/oder einem zyklischen Abtastmuster.

In einer besonders vorteilhaften Ausführungsform ist über die Post Shannon'schen Identifikationsnachrichten auch Informationen zu Positionen innerhalb der Funkzelle kodiert, an der sich der gesteuerte MIMO-Strahl zu dem signalisierten Zeitpunkt T befinden wird. Diese räumliche Kodierung ermöglicht es, die Rückübertragung der IoT-Geräte präzise zu steuern und ausschließlich auf die Bereiche der Funkzelle zu beschränken, die zum entsprechenden Zeitpunkt durch den MIMO-Strahl abgedeckt werden.

Die Kombination aus räumlicher Kodierung und zeitlicher Vorgabe ermöglicht eine hochpräzise Steuerung der Datenübertragungen. Dies ist insbesondere in Szenarien mit einer großen Anzahl von IoT-Geräten und dynamischen Strahlungskeulen von Vorteil, da sowohl die verfügbare Bandbreite als auch die Netzstabilität maximiert werden können.

Mit der Integration von Machine Learning und künstlicher Intelligenz (KI) ist das Radio Access Network (RAN) in der Lage, die Bewegung von Strahlungskeulen, die bewegten Objekten folgen, für spätere Zeitpunkte zu antizipieren. Dazu werden typische Bewegungsmuster der Objekte analysiert, wobei Fahrzeuge sich beispielsweise mit vorhersagbarer Geschwindigkeit auf Straßen bewegen, Fußgänger bestimmte Gehwege nutzen oder in Gebäuden wie Büros, Universitäten oder Geschäften, verweilen, während Drohnen in festgelegten Luftkorridoren fliegen. Mit diesen Vorhersagen bezüglich der sich dynamisch bewegenden Strahlungskeulen lassen sich bestimmte IoT-Geräte vorausschauend über entsprechend Post Shannon'sche Identifikationsnachrichten ansprchen, wodurch die Effizienz und Kapazität des Mobilfunknetzes weiter gesteigert wird.

Dabei ist es eine besondere Idee der Erfindung, mit Hilfe der über einen Broadcast-Kanal verschickten Post Shannon'schen Kommunikationsnachrichten speziell die IoT Sensoren zur Sendung von Daten aufzufordern, die in den Strahlungsbereich einer MIMO-Keule mit ausreichend freier Kapazität kommen.

Wenn die MIMO-Keule einer Mobilfunkbasisstation beispielsweise einem Fahrzeug auf einer Straße folgt, werden mobilen und stationären IoT-Geräte, die sich in der Nähe dieser Straße befinden gezielt eine Post Shannon'sche Identifikationsnachricht angesprochen. Über diese Nachricht, die über den Broadcast-Kanal ausgesendet wird, fordert das Mobilfunknetz diese IoT-Geräte auf, ihre Messwerte zu übertragen. Die Übertragung erfolgt dabei nach einer vorbestimmten Verzögerung respektive in einem bestimmten zeitlich beabstandeten Zeitschlitz, typischerweise einige Sekunden nach Erhalt der Aufforderung durch die Nachricht.

Um die präzise Steuerung der Strahlungskeulen zu gewährleisten, nutzt das Radio Access Network (RAN) vorteilhafterweise eine künstliche Intelligenz (KI). Diese kann beispielsweise basierend auf erlernten Bewegungsmustern mobiler Objekte vorhersagen, wo sich diese sogleich aufhalten und die Strahlungskeulen entsprechend innerhalb der Funkzelle dorthin steuern. Mit den Post Shannon'schen Identifikationsnachrichten werden dann die IoT-Sensoren angesprochen, die diese Strahlungskeulen zur Rückübertragung nutzen können. Die adressierten IoT-Sensoren verwenden die signalisierten Zeitschlitze, um ihre Daten gezielt an das RAN zu senden.

Die Post Shannon'sche Identifikationsnachricht kann dabei eine einfache, aber effiziente Frage der folgenden Art enthalten: "Bin ich an der kodierten Position gemeint und will zum kodierten Zeitpunkt T Daten senden?" Wenn die Antwort des Sensors "Ja" lautet, beginnt er seine Daten typischerweise innerhalb von etwa einer Sekunde insbesondere in dem signalisierten Zeitschlitz an das Mobilfunknetz zu übertragen. Anschließend kehrt der Sensor vorteilhafterweise in den energiesparenden Standby-Modus zurück.

Darüber hinaus können IoT-Sensoren bei ihrer Registrierung im Mobilfunknetz nach Typen (z. B. Health, Wearable, Logistics) qualifiziert oder bestimmten Gruppen zugeordnet werden. Dadurch ist es möglich, die Post Shannon'schen Identifikationsnachrichten so zu gestalten, dass nur spezifische Sensoren oder Sensorgruppen insbesondere entlang des MIMO-Strahls angesprochen werden. So kann in der Post Shannon'schen Identifikationsnachricht eine Gruppe von Sensoren anhand einer bestimmten Funktionalität, wie beispielsweise Sensoren zur Messung der Luftqualität oder Sensoren für Verkehrssysteme, oder eines bestimmten Attributs, wie beispielsweise "mobil" oder "statisch", adressiert werden. Auf diese Weise wird verhindert, dass alle Sensoren gleichzeitig senden, was die Netzressourcen effizienter nutzt und Störungen minimiert.

Die Implementierung des erfindungsgemäßen Verfahrens kann hochdynamisch gestaltet werden, wobei es dem Radio Access Network (RAN) ermöglicht wird, je nach Anforderungssituation verschiedene Abdeckungsmuster innerhalb der Funkzelle zu realisieren. Die Abdeckung der Zellregionen kann durch unterschiedlichste, zeitlich variierende MIMO-Beamforming-Muster realisiert werden, wodurch spezifische Bereiche der Funkzelle priorisiert oder gezielt adressiert werden können. Alternativ wird auf solchermaßen dynamische Muster verzichtet und eine uniforme Abdeckung der Zelle gewährleistet.

In den beschriebenen Szenarien können ungenutzte spektrale Kapazitäten pro Kanal dynamisch der Kommunikation von IoT-Sensoren zugewiesen werden. Da die genaue Position der in der Zelle befindlichen IoT-Sensoren aufgrund ihrer Anzahl und ihrer potenziellen Bewegungen dem Mobilfunknetz a priori nicht bekannt ist, kann mit dem Verfahren eine gezielte Steuerung der Sensoraktivität vorgenommen werden. Dabei werden Post Shannon'sche Identifikationsnachrichten verwendet, um gezielt spezielle Sensoren oder die Sensoren einer Gruppe aufzufordern, ihre jeweiligen Messdaten insbesondere mit vorgegebener Verzögerung oder in zeitlich beabstandeten Zeitschlitzen zu übertragen. Nach der Datenübertragung wechseln die Sensoren automatisch in einen energiesparenden Standby-Modus, bis sie erneut aktiviert werden.

Das erfindungsgemäße Verfahren ist besonders robust gegen sogenannte Type II Fehler. Im ersten Fehlerfall dekodiert ein Sensor "JA", obwohl nicht gemeint war. Das ist unproblematisch, da ihm entsprechend auch keinen Uplink-Kanal angeboten wird. Somit kann er seine anstehenden Daten nicht rückübertragen und muss es weiter versuchen. Im zweiten Fehlerfall dekodiert ein Sensor ein "NEIN", obwohl ein "JA" gemeint war. Auch das ist kein Problem; er muss lediglich etwas länger auf die Rückübertragung warten. Im dritten Fehlerfall würden zu viele Sensoren pro Zeit und Ort "JA" dekodieren. Dann gibt es Race Conditions und die schnellsten Sensoren gewinnen, die anderen müssen länger warten und weiter PSC dekodieren.

Es kann insbesondere in ruhigeren Zeiten vorteilhaft sein, das Verfahren nicht dynamisch sondern in einer Art *"Leuchtturmbetrieb"* durchzuführen, bei dem die MIMO-Keulen wie Suchscheinwerfer die gesamte Zelle um die Antenne herum kontinuierlich abtasten. Dazu wird der azimutale Winkel der Strahlungskeule bei jeder Umdrehung um einen kleinen Wert verändert. Auch in dieser Betriebsrat werden die IoT Sensoren der einzelnen Typen und Gruppen mit Post Shannon Identifikationsnachrichten wiederum aufgefordert, ihre Daten in bestimmten Zeitschlitzen zu senden. Mittels des RAN wird gewährleistet, dass alle Orte innerhalb der Mobilfunkzelle mindestens einmal pro Zeitintervall von beispielsweise einer Stunde abgetastet werden und dabei alle Sensortypen und -gruppen die Möglichkeit erhalten, ihre Nachrichten abzusetzen.

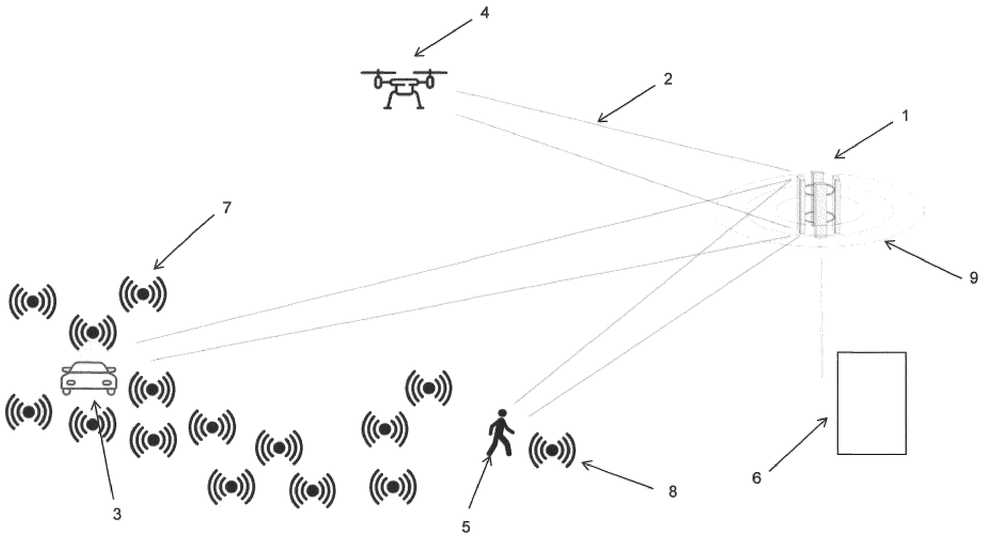

Die Figur zeigt eine beispielhafte Implementierung des erfindungsgemäßen Verfahrens in einer Mobilfunkzelle mit einer Vielzahl von IoT-Sensoren und mobilen Objekten.

Im Mittelpunkt der Darstellung steht als Netzelement eine Basistation mit mehreren MIMO-Antennen 1, die gerichtete Strahlen 2 in Form von sogenannten MIMO-Keulen erzeugt. Diese Strahlen folgen gezielt mobilen Objekten wie einem Fahrzeug 3, einer Drohne 4 und einem Fußgänger 5, die sich innerhalb der Mobilfunkzelle befinden. Die MIMO-Strahlen werden von dem mit einer KI ausgestattete RAN 6 dynamisch ausgerichtet und können auf Basis von individuellen Bewegungsmustern der mobilen Objekte 3, 4, und 5 gesteuert werden.

In der Umgebung der mobilen Objekte befinden sich zahlreiche stationäre IoT-Sensoren 7 und mobile IoT-Sensoren 8. Die Antenne 1 sendet Post Shannon'sche Identifikationsnachrichten über einen Broadcast-Kanal 9 isotrop aus, die an alle IoT-Sensoren 7 und 8 innerhalb des durch die Strahlen 2 abgedeckten Bereichs gerichtet sind. Diese Nachrichten fordern die Sensoren 7 und 8 auf, ihre Daten in bestimmten Zeitschlitzen einer bestimmten MIMO-Keule zu übertragen, sofern sie sich im Strahlungsbereich befinden und die Netzwerkressourcen entsprechend angeboten wurden.

Der Zeitversatz zwischen der Aufforderung und der Datenübertragung ermöglicht es dem Mobilfunknetz, die verfügbaren Ressourcen optimal zu verwalten und die Datenübertragung effizient zu organisieren. Nach der Übertragung ihrer Daten gehen die Sensoren 7 und 8 in einen energiesparenden Standby-Modus über, bis sie erneut aktiviert werden.

Die Figur veranschaulicht zudem die Flexibilität des Verfahrens: Während die Strahlen 2 gezielt mobilen Objekten 3, 4, 5 folgen, können auch stationäre Sensoren 7 in der Nähe der mobilen Objekte 3, 4, 5 angesprochen werden. Dies zeigt die gleichzeitige Unterstützung von mobilen 8 und stationären 7 IoT-Sensoren, wodurch das Verfahren für eine Vielzahl von Anwendungen geeignet ist.

## Patentansprüche

1. Verfahren zum Ressourcenmanagement bei der Datenkommunikation in einer Funkzelle eines Mobilfunknetzes (6), insbesondere nach dem 5G oder einem nachfolgenden Standard, in der eine Vielzahl von kommunikationsfähigen Sensoren (7,8) lokalisiert sind, umfassend:
Aussenden von Post Shannon'schen Identifikationsnachrichten über einen Broadcast-Kanal (9), wobei die Identifikationsnachrichten vorbestimmte Sensoren (7,8) adressieren und zur Rückübertragung von Sensordaten unter Nutzung der freien Uplink-Ressourcen auffordern und
das Rückübertragen von Sensordaten durch die adressierten Sensoren (7,8), bei denen die Dekodierung der Identifikationsnachrichten zu einem positivem Ergebnis führte.

2. Verfahren nach Anspruch 1,
**dadurch gekennzeichnet,**
**dass** die Rückübertragung der Sensordaten in den durch einen gerichteten MIMO-Strahl (2) bereitgestellten freien Uplink-Ressourcen erfolgt.

3. Verfahren nach Anspruch 2,
**dadurch gekennzeichnet,**
**dass** die Strahlungskeule (2) des MIMO-Strahls die Funkzelle gemäß einer vorbestimmbaren Trajektorie und/oder einem zyklischen Abtastmuster überstreicht.

4. Verfahren nach einem der vorherigen Ansprüche,
**dadurch gekennzeichnet,**
**dass** der Zeitpunkt T, an dem die Rückübertragung erfolgen soll, als eine zeitliche Verzögerung nach Erhalt der Post Shannon'schen Identifikationsnachricht vorgegeben ist.

5. Verfahren nach einem der vorherigen Ansprüche,
**dadurch gekennzeichnet,**
**dass** über die Post Shannon'schen Identifikationsnachrichten die Position innerhalb der Funkzelle kodiert wird, an dem sich der MIMO Strahl (2) zum kodierten Zeitpunkt T befinden soll.

6. Verfahren nach einem der vorherigen Ansprüche,
**dadurch gekennzeichnet,**
**dass** in der Post Shannon'schen Identifikationsnachricht eine Gruppe von Sensoren (7,8) anhand einer bestimmten Funktionalität, wie beispielsweise Sensoren zur Messung der Luftqualität oder Sensoren für Verkehrssysteme, oder eines bestimmten Attributs, wie beispielsweise "mobil" oder "statisch", adressiert wird.

7. Verfahren nach einem der vorherigen Ansprüche,
**dadurch gekennzeichnet,**
**dass** ein Sensor (7,8), der eine Frage der Art: "Bin ich an der kodierten Position gemeint und will zum kodierten Zeitpunk T Daten senden?" mit JA dekodiert, die Rückübertragung über den MIMO-Strahl (2) zu dem Zeitpunkt beginnt.

8. Verfahren nach einem der vorherigen Ansprüche,
**dadurch gekennzeichnet,**
**dass** die Ausrichtung des MIMO-Strahls (2) einem bewegten Objekt folgt und eine künstliche Intelligenz (KI) basierend auf erlernten Bewegungsmustern mobiler Objekte (3,4,5) die zukünftigen Strahlungsbereiche innerhalb der Funkzelle vorhersagt.

9. Verfahren nach einem der vorherigen Ansprüche,
**dadurch gekennzeichnet,**
**dass** ein Sensor (7,8), der Sensordaten zu übermitteln hat, von einem energiesparenden Stand-By Modus in einen Empfangsmodus wechselt, um bei positiver Identifizierung zu dem vorgegebenen Zeitpunkt T die Rückübertragung vorzunehmen, wobei er nach Beendigung der Rückübertragung wieder in den Stand-By Modus wechselt.

10. Verfahren nach einem der vorherigen Ansprüche,
**dadurch gekennzeichnet,**
**dass** der MIMO-Strahl (2) insbesondere in Zeiten geringer Nutzlast oder zur Initialisierung neuer IoT Sensoren eine zyklische Abtastung im Sinne eines Leuchtturmverfahrens durchführt, bei dem die gesamte Mobilfunkzelle durch sukzessive Änderung der Strahlrichtung systematisch überstrichen wird.

11. Verfahren nach einem der vorherigen Ansprüche,
**dadurch gekennzeichnet,**
**dass** zwischen dem Mobilfunknetz und den Sensoren (7,8) Zufallszahlen vorverteilt und gespeichert werden, die für die Kodierung und Dekodierung der Identifikationsnachrichten verwendet werden, um die Kanalgewinne realisieren zu können.

12. Verfahren nach Anspruch 11,
**dadurch gekennzeichnet,**
**dass** die Zufallszahlen während eines Handover-Prozesses an die Sensoren (7,8) verteilt werden.

13. Verfahren nach Anspruch 11,
**dadurch gekennzeichnet,**
**dass** die Zufallszahlen zu festgelegten Zeiten für alle stationären Sensoren (7) ausgetauscht werden.

14. Kommunikationssystem zur Datenkommunikation in einer Funkzelle eines Mobilfunknetzes (6), insbesondere nach dem 5G- oder einem nachfolgenden Standard, umfassend:
ein Netzelement (1), insbesondere eine Basisstation, das ausgebildet ist,
- freie Uplink-Ressourcen in der Funkzelle zu bestimmen und
- Post Shannon'sche Identifikationsnachrichten über einen Broadcast-Kanal (9) auszusenden, wobei die Identifikationsnachrichten spezifische Sensoren (7,8) adressieren und diese zur Rückübertragung von Sensordaten in den identifizierten freien Uplink-Ressourcen auffordern,
eine Vielzahl von kommunikationsfähigen Sensoren (7,8), die in der Funkzelle lokalisiert sind und ausgebildet sind,
- die Post Shannon'schen Identifikationsnachrichten zu empfangen und zu dekodieren und
- basierend auf dem Ergebnis der Dekodierung bei positivem Ergebnis die Rückübertragung von Sensordaten in den freien Uplink-Ressourcen vorzunehmen.
